(19) Europäisches Patentamt
European Patent Office
Office européen des brevets

(11) **EP 1 920 565 B1**

(12) **EUROPEAN PATENT SPECIFICATION**

(45) Date of publication and mention
of the grant of the patent:
**04.03.2015 Bulletin 2015/10**

(51) Int Cl.:
***H04L 12/70*** *(2013.01)*

(21) Application number: **06795766.2**

(22) Date of filing: **24.08.2006**

(86) International application number:
**PCT/IB2006/052941**

(87) International publication number:
**WO 2007/023468 (01.03.2007 Gazette 2007/09)**

(54) **METHOD AND CIRCUIT FOR CALCULATING A TIMEOUT PARAMETER IN A COMMUNICATION SESSION**

VERFAHREN UND SCHALTUNG ZUR BERECHNUNG EINES ZEITÜBERSCHREITUNGSPARAMETERS IN EINER KOMMUNIKATIONSSITZUNG

PROCEDE ET CIRCUIT DE CALCUL D'UN PARAMETRE DE TEMPS MORT DANS UNE SESSION DE COMMUNICATION

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.08.2005 EP 05107805**

(43) Date of publication of application:
**14.05.2008 Bulletin 2008/20**

(73) Proprietor: **NXP B.V.**
**5656 AG Eindhoven (NL)**

(72) Inventor: **GALLO, Francesco**
**A-1101 Vienna (AT)**

(74) Representative: **Schouten, Marcus Maria et al**
**NXP B.V.**
**Intellectual Property & Licensing**
**High Tech Campus 60**
**5656 AG Eindhoven (NL)**

(56) References cited:
**US-A- 6 047 322**      **US-A1- 2002 010 938**
**US-A1- 2002 154 602**      **US-B1- 6 401 127**

**Description**

FIELD OF THE INVENTION

The invention relates to a method for calculating a timeout parameter in a communication session.

The invention also relates to a circuit designed to calculate a timeout parameter in a communication session according to the above-mentioned method.

The invention further relates to a communication device comprising a circuit according to the preceding paragraph.

The invention further relates to a computer readable media containing a computer executable programme for performing the above-mentioned method.

The invention further relates to a computer programme performing a calculation of a timeout parameter in a near field communication session according to the present invention.

BACKGROUND OF THE INVENTION

Identification products such as smart cards and RFID (Radio Frequency IDentification) tags are used widely in fields such as transport (ticketing, road tolling, baggage tagging), finance (debit and credit cards, electronic purse, merchant card), communications (SIM card for GSM phone), and tracking (access control, inventory management, asset tracking).

International standard ISO14443A is an industry standard for contact-less smart cards. ISO14443A compliant products provide RF communication technology for transmitting data between a card or tag and a reader device. For example, in electronic ticketing for public transport, travellers just wave their card over a reader at the turnstiles or entry point, benefiting from improved convenience and speed in the ticketing process. Such products are set to be the key to individual mobility in the future, supporting multiple applications including road tolling, airline tickets, access control and many more.

Evolving from a combination of contact-less identification and networking technologies, Near Field Communication (NFC) is a very short-range wireless technology, for distances measured in centimetres, and is optimised for intuitive, easy and secure communications between various devices without user configuration. In order to make two devices communicate, users bring them close together or even make them touch. The devices' NFC interfaces will automatically connect and configure themselves to form a peer-to-peer network. NFC can also bootstrap other protocols like Bluetooth™ or Wireless Ethernet (WiFi) by exchanging the configuration and session data. NFC is compatible with contact-less smart card platforms. This enables NFC devices to read information from these cards, making contact-less smart cards the ideal solution for bringing information and vouchers into the NFC world. NFC devices can also operate like a contact-less card making them compatible with the huge installed infrastructure of ISO14443A-compliant systems.

Secure NFC combines NFC applications with smart card security. Devices with secure NFC act like a contact-less smart card with cryptographic capabilities. This means that confidential data, and data that represents values, is stored in a secure memory area and always stays on the card. Authentication is performed by the NFC device itself and transmitted data can be encrypted by the NFC device using a private encryption key stored in the device's secure memory.

According to the ISO 18092 standard, within the context of a near field communication, the Logical Link Control Protocol (LLCP) has been standardised. The LLCP provides data service to be able to send and receive LLCP data packets over the NFCIP-1 link. LLCP manages sessions recovering connections that have been disconnected at NFC layer for a relative short time (seconds) without re-establishing it from scratch and without re-sending all the already transmitted data between two peer devices.

To recover a session the GAP_TIMEOUT has been added to LLCP on the Target devices. The Target uses the GAP_TIMEOUT to detect if the underlying NFC communication is broken. When the timeout expires the Target assumes that the connection is lost and starts to recover it doing the device discovery for SESSION_TIMEOUT seconds. If the connection is not re-established before the SESSION_TIMEOUT the session is definitely closed. Looking at the LLCP specification, the SESSION_TIMEOUT must be bigger or equal to GAP_TIMEOUT, however the GAP_TIMEOUT value is not specified.

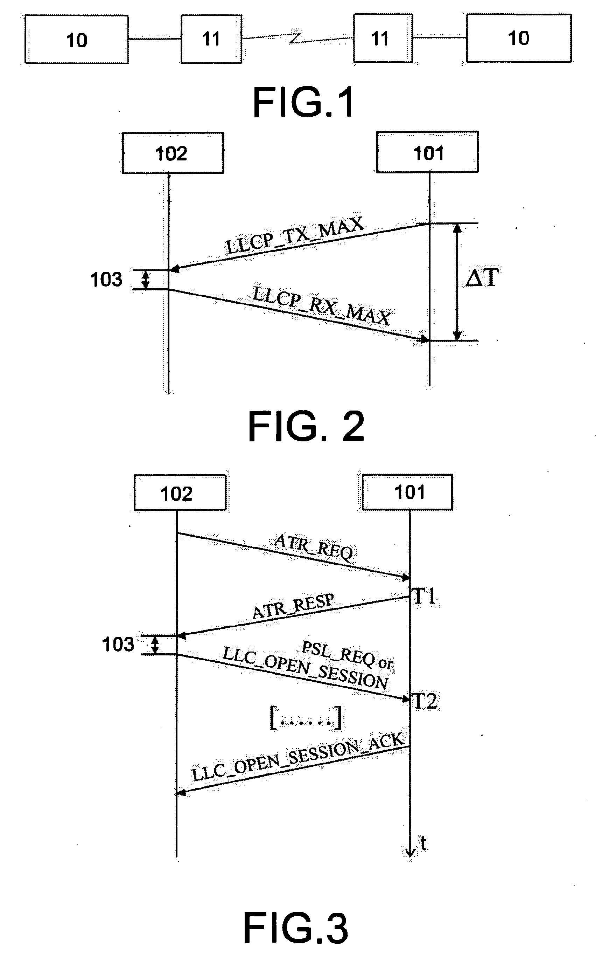

GAP_TIMEOUT should be equal to the time measured on the Target side to send and receive a LLC_TRANSFER packet with the maximum allowed LLCP payload. A priori it is not possible to decide the GAP_TIMEOUT because the time to send and receive a LLC_TRANSFER depends on NFC bit rate (see standard ISO 18092), and the link speed between Host 11 and Host Controller 10 (see Figure 1), and the computational capabilities of Host 11 and Host Controller 10.

A wrong GAP_TIMEOUT has an influence on the SESSION_TIMEOUT. A too long GAP_TIMEOUT can introduce a too long delay that can disrupt the NFC user experience, instead a too short GAP_TIMEOUT can make useless the LLCP session recovering because there is not enough time to perform the device discovery (see LLCP specification).

# EP 1 920 565 B1

US 6,401,127 relates to communications over a computer network, and more particularly to the use of timing events to detect loss of a frame.

To this end, US 6,401,127 discloses a method for computing an ACK timing interval for an ACK timer in a protocol layer LLC type 2 session wherein a time interval between transmission of a frame by a source computer joined to a destination computer by an intermediate link, and receipt of a corresponding acknowledgement frame by the source computer from the destination computer is first measured. The two events at the source computer, starting a timer upon commencement of transmission of a frame or sequence of frames and the later reception of an acknowledge message indicating receipt of those frames, permits calculation of a measured time interval. The measured time interval is used to compute the bandwidth of the intermediate link.

The bandwidth is calculated by dividing the number of bytes transmitted by the two way round-trip time. The timeout parameter in turn is calculated by dividing the number of bytes in packets sent divided by the bandwidth plus a "time adder for uncertainty". The term "time adder for uncertainty" is added in order to avoid making the timeout parameter just marginally too short. For example, the value of time adder for uncertainty may be computed as a percentage of the first term: number of bytes in package sent divided by the bandwidth, for example a value such as 1 %, 5 %, 10 % etc. A percentage may be selected in order to reduce the timeouts to an acceptable fraction of communication session attempts, and small enough to increase utilisation of the bandwidth of the communication link.

The disadvantage of using a time adder for uncertainty is that this parameter has to be manually set and results inaccurate values for the session timeout parameter that could be either too long or too short.

OBJECT AND SUMMARY OF THE INVENTION

It is therefore an object of the present invention to provide a method as defined in the first paragraph and an apparatus as defined in the second paragraph, as well as a computer readable media and a computer programme as defined in the third and fourth paragraph, in which the disadvantages defined above are avoided.

In order to achieve the object set out above by means of a method for calculating a timeout parameter in a near field communication session according to the invention characteristic features are provided, so that a method of calculating a timeout parameter in a communication session comprising the steps as defined in claim 1.

In order to achieve the object set out above by means of a circuit designed of calculating a timeout parameter in a communication session according to the invention characteristic features are provided, so that a circuit according to the invention is characterised as defined in claim 3.

In order to achieve the object set out above by means of a communication device according to the invention characteristic features are provided, so that a communication device according to the invention comprises a circuit according to the invention.

In order to achieve the object set out above by means of a computer readable media according to the invention characteristic features are provided, so that a computer readable media according to the invention is characterised in that: A computer readable media containing a computer executable programme for performing the method according to the invention.

In order to achieve the object set out above by means of a computer programme product performing a calculation of a timeout parameter in a near field communication session according to the present invention characteristic features are provided, so that a computer programme according to the invention is characterised as defined in claim 6.

The provision of the features according to the invention provides the advantage that an appropriate timeout parameter can be automatically determined.

The measures claimed in claim 2 provide the advantage of a more flexible calculation of the timeout parameter.

In summary, the invention estimates the timeout parameter on the target side before the establishment of the LLCP connection. The advantage is an estimation of the timeout parameter on the target side just looking at the packets exchanged during the first phase of the NFC connection establishment.

An estimated timeout value can avoid choosing a too long or too short actual timeout parameter, improving the user experience (avoiding too long delays) and the NFC LLCP behaviour. The invention can be applied to all NFC devices supporting the LLCP layer.

BRIEF DESCRIPTION OF THE DRAWINGS

Fig. 1 is a diagram showing a connection between two sets of hosts and host controllers according to the background art.
Fig. 2 is a diagram showing a communication link between a target communication device and a initiator communication device, wherein a LLCP Maximum Round Trip Time ΔT is given.

Fig. 3 is a diagram showing a communication link between a target communication device and a initiator communication device, wherein the NFC packets exchanged before the LLCP connection establishment are illustrated.

DESCRIPTION OF EMBODIMENTS

An embodiment of the present invention is given below.

Figure 2 shows a target communication device 101 and a initiator communication device 102. Both communication devices 101 and 102 comprise an electronic circuit, preferably an integrated circuit (not shown in Figure 2) and communication means that are designed for contact-less radio frequency communication. In the present case a communication coil is provided as the communication means for inductive coupling between the two communication devices 101 and 102. However also antenna configurations like mono-pole or multi-pole antennas are applicable. For both devices the circuit is designed to process and to communicate date according to the international standard 18092. The circuit is connected to the communication means of the respective communication device 101 and 102.

The circuit of the target communication device 101 is designed to perform a time out parameter in a communication session. In the present case a near field communication session is considered. However also other ranges of communication may be considered as the invention shall not be consider to be limited to near field communication only.

The circuit of the target communication device 101 comprises means for calculating a throughput of a connection between the initiator communication device 102 and the target communication device 101 and comprises means for calculating a maximum round trip time for the maximum data packet that is possible to be sent and received based on the calculated throughput and comprises means for setting a session timeout parameter equal to the calculated maximum round trip time. Said means for calculating the throughput and said means for calculating the maximum round trip time and said means for setting a session timeout parameter are realized by means of hardwired logic but may also be realized by means of a micro controller or microprocessor on which a computer program product is executed that realizes said means. The computer program product can be stored on a computer readable medium, like a CD or a DVD, but may also resign in a non volatile memory of said micro controller or in a similar memory that is associated with said microprocessor.

In the following the operation of said means of the circuit of the target communication device 101 is described in more details. Referring to Fig. 2, the timeout parameter for a NFC session is a timeout bigger than the time $\Delta T$ needed to send the biggest transmittable LLCP data packet (LLCP_TX_MAX) from the target communication device 101 side and to receive the biggest receivable LLCP data packet (LLCP_RX_MAX). $\Delta T$ is the maximum round trip time at LLCP level, and should be:

$$\Delta T \leq \text{timeout parameter}$$

The sizes LLCP_TX_MAX_SIZE and LLCP_RX_MAX_SIZE are fixed by the NFC implementation. They depend on the NFCIP-1 receiver and transmitter buffer size because on the LLCP packet the NFCIP-1 chaining will be applied. Referring to Fig. 3, on the target communication device 101 side two time stamps are taken exactly when at the LLCP level the ATR_RESP is sent (at timing Tl), and the PSL_REQ or LLC_OPEN_SESSION is received (at timing T2). Using the time stamps and the size of these two packets it is possible to calculate the throughput at NFC level, taking into account a computational delay 103 on the initiator communication device 102 side. The computational delay 103 is a fixed time delay. Consequently, since during initialisation of the communication link small sized data packets are being sent, a calculated throughput is proportionately lower than when sending large sized data packets. Hence, based on the above calculation, the throughput is being underestimated.

The throughput is measured taking into account the bytes in the transport data field. ATR_RESP is 16 bytes long, PSL_REQ is five bytes long and LLC_OPEN_SESSION is 16 bytes in length. The formulas determine the throughput ($\hat{B}$) from packet sizes and time stamps:

$$\hat{B} = \frac{ATR\_RESP\_SIZE + PSL\_REQ\_SIZE}{T2 - T1} = \frac{21}{T2 - T1} \qquad (1)$$

$$\hat{B} = \frac{ATR\_RESP\_SIZE + LLC\_OPEN\_SESSION\_SIZE}{T2 - T1} = \frac{32}{T2 - T1} \quad (2)$$

Formula (1) should be used if the packet sent immediately after the ATR_RESP to the same target communication device 101 is a PSL_REQ, otherwise if the packet is LLC_OPEN_SESSION, formula (2) should be used.

From $\hat{B}$ knowing the maximum LLCP packet that is possible to be sent (LLCP_TX_MAX_SIZE) and received (LLCP_RX_MAX_SIZE) with the current hardware/software in the target communication device 101, it is possible to calculate ΔT (LLCP maximum round trip time):

$$\Delta\hat{T} = \frac{LLCP\_TX\_MAX\_SIZE - LLCP\_RX\_MAX\_SIZE}{\hat{B}} \quad (3)$$

$\Delta\hat{T}$ is overestimated because the throughput ($\hat{B}$) is underestimated, hence the actual $AT < \Delta\hat{T}$. If $\Delta\hat{T}$ = timeout parameter, then ΔT ≤ timeout parameter.

Hence, the throughput of the connection is calculated by measuring the time span between sending a first data packet from a target communication device 101 to a initiator communication device 102 and receiving a second data packet from the initiator communication device 102, the packets being smaller than a maximum packet size, wherein the time span taken by the initiator communication device 102 from receiving the first data packet to sending the second data packet is a fixed computational delay, so that when sending small sized data packets, a calculated throughput will be proportionately lower than when sending large sized data packets.

In summary, one main aspect of the invention can therefore be seen in underestimating a throughput based on an initial communication and computing there from an overestimated $\Delta\hat{T}$ based on this underestimated throughput and known data size parameters LLCP_TX_MAX and LLCP_RX_MAX defined / fixed by the NFC implementation and using the overestimated $\Delta\hat{T}$ as timeout parameter. In this way, by underestimating a throughput based on an initial communication and computing there from an overestimated timeout parameter, a suitable value for the timeout parameter is automatically determined at the initialisation stage.

It is to be appreciated that the reference signs within the claims are only given for illustrative purposes and shall not be construed as limiting the scope of the invention for which protection is sought.

Although reference is made to the NFC standard throughout the preceding described embodiment it is to mention that the invention is also applicable to other communication methods and standards.

**Claims**

1. Method of calculating a timeout parameter in a near-field communication session before establishing a logical link control protocol, hereafter called LLCP, connection, comprising the steps of:

   - initiating a session;
   - calculating a throughput of the connection during initialization of the session by measuring a time span between sending a first data packet comprising a first number of bits from a target communication device to an initiator communication device and receiving a second data packet comprising a second number of bits from the initiator communication device on the target communication device (101), said time span including a fixed computational time delay (103) of the initiator communication device (102) and dividing the sum of said first number and second number by the measured time span, wherein said first and second data packets are smaller than a maximum packet size;
   - calculating a maximum round trip time based on the difference between the maximum LLCP packet that is possible to be sent and received divided by the calculated throughput at the initialization stage;
   - setting a session timeout parameter for said near field communication session equal to the calculated maximum round trip time.

2. The method according to claim 1, wherein the data packet size used to calculate the throughput depends on the number of bytes in a Transport Data Field.

3. Circuit for a near-field communication target communication device, said circuit is designed to perform a calculation of a timeout parameter in a communication session at the initialization stage before establishing a logical link control protocol, hereafter called LLCP, connection comprising:

- a means for calculating a throughput of the connection during initialization of the session by measuring a time span between sending a first data packet comprising a first number of bits to an initiator communication device and receiving a second data packet comprising a second number of bits from the initiator communication device, said time span including a fixed computational delay of the initiator communication device, and dividing the sum of said first number and second number by the measured time span;
- a means for calculating a maximum round trip time based on the difference between the maximum LLCP packet that is possible to be sent and received based on the calculated throughput;
- a means for setting a session timeout parameter for said near field communication session equal to the calculated maximum round trip time.

4. Communication device comprising a circuit according to claim 3.

5. A computer readable media containing a computer executable programme for performing the method of claims 1 to 2.

6. A computer programme product comprising software portions performing on a computer when executed the method of claims 1 to 2.

7. The computer program product according to claim 6, wherein the data packet size used to calculate the throughput depends on the number of bytes in the Transport Data Field.

**Patentansprüche**

1. Verfahren zum Berechnen eines Time-out-Parameters in einer Nahfeldkommunikationssession vor einem Erstellen einer Logical Link Control Protokoll, hiernach LLCP genannt, Verbindung, aufweisend die Schritte:

- Initiieren einer Session;
- Berechnen eines Durchsatzes der Verbindung während der Initiierung der Session mittels Messens einer Zeitspanne zwischen einem Senden eines ersten Datenpakets, aufweisend eine erste Anzahl von Bits, von einer Zielkommunikationsvorrichtung an eine Initiiererkommunikationsvorrichtung und ein Empfangen eines zweiten Datenpakets, aufweisend eine zweite Anzahl von Bits, von der Initiiererkommunikationsvorrichtung an die Zielkommunikationsvorrichtung (101), wobei die Zeitspanne eine feste Rechenzeitverzögerung (103) der Initiiererkommunikationsvorrichtung (102) umfasst, und Dividieren der Summe der ersten Anzahl und der zweiten Anzahl durch die gemessene Zeitspanne, wobei das erste Datenpaket und das zweite Datenpaket kleiner sind als eine maximale Paketgröße;
- Berechnen einer maximalen Round-Trip-Zeit basierend auf der Differenz zwischen dem maximalen LLCP Paket, welches möglich ist gesendet zu werden und empfangen zu werden, dividiert durch den berechneten Durchsatz an der Initiierstufe;
- Festlegen eines Session-Time-out-Parameters für die Nahfeldkommunikationssession gleich wie die berechnete maximale Round-Trip-Zeit.

2. Verfahren gemäß Anspruch 1, wobei die Datenpaketgröße, welche zum Berechnen des Durchsatzes verwendet wird, von der Anzahl von Bytes in einem Transportdatenfeld abhängt.

3. Schaltkreis für eine Nahfeldkommunikationszielkommunikationsvorrichtung, wobei der Schaltkreis entworfen ist, um eine Berechnung eines Time-out-Parameters in einer Kommunikationssession an der Initiierstufe durchzuführen bevor eine Logical Link Control Protokoll, hiernach LLCP genannt, Verbindung erstellt wird, aufweisend:

- ein Mittel zum Berechnen eines Durchsatzes der Verbindung während einer Initiierung der Session mittels Messens einer Zeitspanne zwischen einem Senden eines ersten Datenpakets, aufweisend eine erste Anzahl von Bits, an eine Initiiererkommunikationsvorrichtung und ein Empfangen eines zweiten Datenpakets, aufweisend eine zweite Anzahl von Bits, von der Initiiererkommunikationsvorrichtung, wobei die Zeitspanne eine feste Rechenverzögerung der Initiiererkommunikationsvorrichtung umfasst, und Dividieren der Summe der ersten Anzahl und der zweiten Anzahl durch die gemessene Zeitspanne;

- ein Mittel zum Berechnen einer maximalen Round-Trip-Zeit basierend auf der Differenz zwischen dem maximalen LLCP Paket, das möglich ist gesendet zu werden und empfangen zu werden, basierend auf dem berechneten Durchsatz;
- ein Mittel zum Festlegen eines solchen Time-out-Parameters für die Nahfeldkommunikationssession gleich wie die berechnete maximale Round-Trip-Zeit.

4. Kommunikationsvorrichtung aufweisend einen Schaltkreis gemäß Anspruch 3.

5. Ein Computer-lesbares Medium, welches ein Computer-ausführbares Programm zum Durchführen des Verfahrens gemäß den Ansprüchen 1 bis 2 beinhaltet.

6. Ein Computerprogrammprodukt aufweisend Softwareabschnitte, welche auf einem Computer ausgeführt werden, wenn das Verfahren gemäß den Ansprüchen 1 bis 2 durchgeführt wird.

7. Computerprogrammprodukt gemäß Anspruch 6, wobei die Datenpaketgröße, welche verwendet ist, um den Durchsatz zu berechnen, von der Anzahl von Bytes in dem Transportdatenfeld abhängt.

**Revendications**

1. Procédé de calcul d'un paramètre de temporisation dans une session de communication en champ proche préalablement à l'établissement d'une connexion sous protocole de commande de liaison logique, dit LLCP, comprenant les étapes suivantes :

   - l'initiation d'une session ;
   - le calcul d'un débit de la connexion au cours de l'initialisation de la session par mesure d'un laps de temps entre l'envoi d'un premier paquet de données comprenant un premier nombre de bits depuis un dispositif de communication cible vers un dispositif de communication initiateur et la réception d'un deuxième paquet de données comprenant un deuxième nombre de bits depuis le dispositif de communication initiateur sur le dispositif de communication cible (101), ledit laps de temps comportant un délai de calcul fixe (103) du dispositif de communication initiateur (102), et par division de la somme desdits premier nombre et deuxième nombre par le laps de temps mesuré, lesdits premier et deuxième paquets de données étant plus petits qu'une taille de paquet maximale ;
   - le calcul d'un temps de trajet aller-retour maximal sur la base de la différence entre le paquet LLCP maximal susceptible d'être envoyé et reçu divisée par le débit calculé au stade de l'initialisation ;
   - la fixation d'un paramètre de temporisation de session pour ladite session de communication en champ proche à la valeur du temps de trajet aller-retour maximal calculé.

2. Procédé selon la revendication 1, dans lequel la taille de paquet de données utilisée dans le calcul du débit est fonction du nombre d'octets dans un champ de données de transport.

3. Circuit pour un dispositif de communication cible pour communication en champ proche, ledit circuit étant conçu pour effectuer un calcul d'un paramètre de temporisation dans une session de communication au stade de l'initialisation préalablement à l'établissement d'une connexion sous protocole de commande de liaison logique, dit LLCP, comprenant :

   - un moyen de calcul d'un débit de la connexion au cours de l'initialisation de la session par mesure d'un laps de temps entre l'envoi d'un premier paquet de données comprenant un premier nombre de bits vers un dispositif de communication initiateur et la réception d'un deuxième paquet de données comprenant un deuxième nombre de bits depuis le dispositif de communication initiateur, ledit laps de temps comportant un délai de calcul fixe du dispositif de communication initiateur, et par division de la somme desdits premier nombre et deuxième nombre par le laps de temps mesuré ;
   - un moyen de calcul d'un temps de trajet aller-retour maximal sur la base de la différence entre le paquet LLCP maximal susceptible d'être envoyé et reçu sur la base du débit calculé ;
   - un moyen de fixation d'un paramètre de temporisation de session pour ladite session de communication en champ proche à la valeur du temps de trajet aller-retour maximal calculé.

4. Dispositif de communication comprenant un circuit selon la revendication 3.

**5.** Support lisible par ordinateur contenant un programme exécutable par ordinateur permettant d'accomplir le procédé selon les revendications 1 et 2.

**6.** Produit-programme d'ordinateur comprenant des parties logicielles qui, une fois exécutées, accomplissent sur un ordinateur le procédé selon les revendications 1 et 2.

**7.** Produit-programme d'ordinateur selon la revendication 6, dans lequel la taille de paquet de données utilisée dans le calcul du débit est fonction du nombre d'octets dans le champ de données de transport.

# FIG.1

# FIG. 2

# FIG.3

**EP 1 920 565 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6401127 B